# EUROPEAN PATENT APPLICATION

(11) **EP 4 434 858 A1**
(43) Date of publication of application: **25.09.2024**
(21) Application number: 23164172.1
(22) Date of filing: 24.03.2023
(51) Int. Cl.: B62D 53/00, B62D 65/18, B60S 13/00, B60D 1/48, B65G 37/02, B25J 5/00, B65G 1/137

(54) **TRANSPORT APPARATUS, METHOD AND SYSTEM, FOR OBJECT HANDLING**

(71) Applicant: The Automation Group Limited, Gateshead Tyne and Wear NE10 0ES (GB)
(72) Inventor: SMITH, Chistopher, Gateshead (GB)
(74) Representative: Murgitroyd & Company

(57) **Abstract**

A transport apparatus, method of using and an object handling system, wherein the transport apparatus (1) comprises: a drive system (5); a coupling device (6) configured to move between a first coupled configuration wherein the coupling device is configured to enable engagement with a wheeled object (2), and a second non-coupled configuration wherein the coupling device is configured not to enable engagement with a wheeled object (2); and a controller to control the movement of the transport apparatus (1) and the movement of the coupling device (6) between the coupled configuration and non-coupled configuration.

## Description

The present invention relates to a transport apparatus, system and method, for transporting objects, for example, in an object handling system, and relates particularly, but not exclusively, to a transport apparatus for use in a queuing system for goods.

Objects such as trolleys, pallets or similar containers are often used to enable transfer of goods between different locations, for example where such goods are loaded into or unloaded from transport vehicles. Movement of trolleys or pallets is often carried out manually, or by means of forklift trucks, conveyor systems or automatic guided vehicles. Often the object to be moved is required to be lifted up and relocated. To lift up, often very heavy objects, requires a great deal of force and energy, for whatever equipment is required to complete the lifting process.

Within such systems, there is often a requirement to create a queue of objects, for example in one method, particularly for use with pallets, items are loaded onto an input end of a driven roller conveyor system and transferred automatically to an outfeed end. Items are prevented from leaving the outfeed end by a stop mechanism, as a result of which items queue up behind one another so that the first item to enter the queue is the first to leave.

This arrangement suffers from the drawback that when an item is stopped on the conveyor, it must have a relatively smooth or low friction base, as the driven conveyor rollers continue to rotate, causing significant loading of the stop mechanism. In particular, the inertia generated by heavy items moving along the conveyor and being brought to rest by a stop mechanism results in high forces being applied to the stop mechanism during deceleration of the items.

This problem can be partially mitigated by separating the conveyor into sections that are controlled and driven separately and using stop mechanisms with inbuilt dampers, but this significantly increases the cost and complexity of the handling system.

In addition, object queues need to be positioned above floor level to provide sufficient space for motor drives and conveyor rollers and associated framework, as a result of which lift devices are often required to move items to the required height for entry into and exit from the object queue. These arrangements suffer from the drawback that manual involvement is required in order to enter trolleys into the input of the queue, remove trolleys from the queue, and move trolleys along the queue to eliminate empty spaces as trolleys are removed from the end of the queue.

Many prior art transport apparatus and object handling systems require a fixed guidance system such are rails or tracks or expensive underfloor guidance means.

Preferred embodiments of the present invention seek to overcome one or more of the above disadvantages.

In a first aspect of the invention there is provided, a transport apparatus for transporting objects, for example wheeled objects, in an object handling system, the transport apparatus comprising:
- a drive system for moving the transport apparatus;
- a coupling device configured to move between at least, a first coupled configuration wherein the coupling device is configured to enable engagement with a wheeled object, such that movement of the transport apparatus enables movement of a coupled wheeled object, and a second non-coupled configuration wherein the coupling device is configured not to enable engagement with a wheeled object, such that movement of the transport apparatus does not move a wheeled object via the coupling device;
- a controller to control the movement of the transport apparatus and the movement of the coupling device between the coupled configuration and non-coupled configuration.

This type of transport apparatus allows the transport apparatus to be used to transport wheeled objects, for example trolleys, without the need for a rail system or other guidance means like an under floor guidance means.

This type of transport apparatus allows the transport apparatus to be used to transport wheeled objects, for example trolleys, without the need for lifting the object to be moved. Advantageously the transport device can be much simpler in construction and use less power as pushing objects for example wheeled objects is much easier than lifting.

In some embodiments the drive system comprises a steering system. This enables the transport apparatus to be steered for example via the controller of the transport apparatus which may receive instructions from a controller of an object handling system. These instructions may be communicated wirelessly from the controller of the object handling system to the controller of the transport apparatus. Means to enable this communication and control is known to the person skilled in the art.

Steering for the transport apparatus of the present invention can be carried out in a number of ways known to the person skilled in the art. For example a differential drive system, where the speed of two motors arranged opposite one another on a frame with a common pivot point, alters the speed of each motor causing the frame to rotate about the pivot point causing the direction of travel to change. One of the disadvantages of this method is that the apparatus must be wide enough to enclose the drive system requiring a wider travel path.

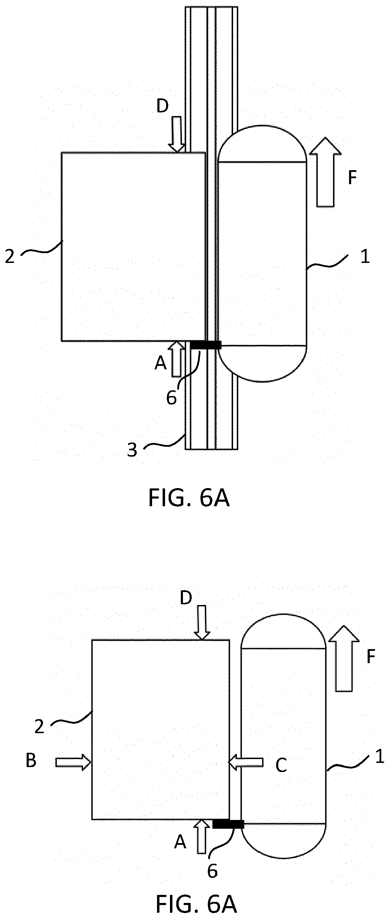

A preferred option that takes up less space, uses a single drive motor that is fitted to a vertical rotational axis. An example of combined steer and drive unit is shown in figure 6 uses a steering motor attached to frame connected to a vertical axis. The vertical axis is connected to a frame containing a drive motor and drive wheel assembly.

In some embodiments of the present invention the transport apparatus or the object handling system or a method of using a transport apparatus, may use an independent guidance method in the new apparatus, a steering system rather than an external track or other guidance means. The coupling means or coupling device, allows the transport apparatus to connect to the object, for example to be moved, to guide and to steer it.

In some embodiments the guidance of the transport apparatus can also be independent of the guidance of the wheeled object, by using a separate guidance method such as a floor mounted magnetic strip or other remote guidance device such as a laser scanner that can determine the position and orientation of the transport apparatus from features of the environment it moves within.

In some embodiments the transport apparatus may change its guidance method at different times depending upon the type of movement it is required to undertake. When the transport apparatus is used to move wheeled objects in a queue a mechanical rail or track may be required to maintain alignment of the wheeled objects when connecting and disconnecting to and from the transport apparatus and to permit movement of a number of objects to be moved at the same time by enabling the transport apparatus to push one object that then pushes the next wheeled object in the queue.

When mechanical guidance is used, the transport apparatus is not necessarily required to constrain or limit the travel of the wheeled object to be moved, other than in the direction of movement enforced by the mechanical guidance, as this is the purpose of the track or rail etc. When no mechanical guidance, for example a track, is present a coupling that is limited to movement only in the direction of travel, is required on the transport apparatus. This coupling will, in some applications, may be required to move outside the travel path of the wheeled object when it is not in use to permit the transport apparatus to move alongside the objects to be moved without connecting to it or colliding with it.

In some embodiments the transport apparatus comprises a forward-restraining mechanism.

In some embodiments the forward-restraining mechanism comprises a bar.

In some embodiments the transport apparatus comprising, a forward-restraining mechanism configured to prevent a wheeled object, when coupled with the transport apparatus, from being moved in a forward direction from the direction of travel, beyond a pre-set distance from an engaging portion of the coupling device of the transport apparatus.

In some embodiments the forward-restraining mechanism and the coupling device are configured to move between the said at least first configuration and second configuration simultaneously.

In some embodiments the forward-restraining mechanism is a driven mechanism. Advantageously in embodiments wherein the forward-restraining mechanism is a driven mechanism it may be moved by a power and drive source.

In some embodiments the transport apparatus comprises a forward-restraining mechanism configured to prevent a wheeled object, when coupled with the transport apparatus, being moved in a forward direction, beyond a pre-set distance from an engaging portion of the coupling device of the transport apparatus.

In some embodiments the transport apparatus comprises a the forward-restraining mechanism, wherein the forward-restraining mechanism is configured to move between at least,
- a first extended, or coupled, configuration wherein the forward-restraining mechanism in the extended or coupled configuration is in the forward path of a coupled wheeled object when coupled to the transport apparatus, and,
- a second non-extended, or non-coupled, configuration wherein the forward-restraining mechanism is configured not to restrain forward movement of a wheeled object.

Wherein, in some embodiments, the coupling device comprises a forward-restraining mechanism configured to prevent a wheeled object that is coupled with the transport apparatus, being moved in a forward direction, beyond a pre-set distance from the engaging portion of the coupling device of the transport apparatus. This may prevent the wheeled object being transported or moved forward from the transport apparatus when the transport apparatus is slowing down in speed or indeed coming to a stop. Such a mechanism may help prevent crashes from a wheeled object still moving for example in a forward direction when the transport apparatus has come to a stop or slowed down. The use of the forward restraining mechanism may allow that movement of the wheeled object being moved corresponds closely with the movement of the transport apparatus, such that when the transport apparatus slows down the object being moved should, fairly near, slow down at the same rate too.

In some embodiments the forward-restraining mechanism is configured to move between at least,
- an extended, or coupled, configuration wherein the forward-restraining mechanism in the extended or coupled configuration is in the forward path of a coupled wheeled object, and,
- a second non-extended, or non-coupled, configuration wherein the forward-restraining mechanism is configured not to restrain forward movement of a wheeled object.

In some embodiments the transport apparatus comprising, a transverse-restraining mechanism configured to prevent a wheeled object, when coupled with the transport apparatus, from being moved in a transverse direction from the direction of travel, beyond a pre-set distance from an engaging portion of the coupling device of the transport apparatus.

In some embodiments the transport apparatus comprises a transverse-restraining mechanism configured to move between at least,
- a first extended, or coupled, configuration wherein the transverse-restraining mechanism in the extended or coupled configuration is in a transverse path of a coupled wheeled object when coupled with the transport apparatus, and,
- a second non-extended, or non-coupled, configuration wherein the transverse-restraining mechanism is configured not to restrain transverse movement of a wheeled object.

In some embodiments the transverse-restraining mechanism comprises a bar.

In some embodiments the transverse-restraining mechanism and the coupling device are configured to move between the said at least first configuration and second configuration simultaneously.

In some embodiments the forward-restraining mechanism and the transverse-restraining mechanism are the same item.

In some embodiments the transverse-restraining mechanism is a driven mechanism. Advantageously in embodiments wherein the transverse-restraining mechanism is a driven mechanism it may be moved by a power and drive source.

In some embodiments the coupling device is a driven device. Advantageously in embodiments wherein the coupling device is a driven device it may be moved by a power and drive source.

Wherein, in some embodiments, the coupling device further comprises a transverse-restraining mechanism configured to prevent a wheeled object when coupled to the transport apparatus, from being moved in a, at least one, transverse direction from the direction of travel, beyond a pre-set distance from the engaging portion of the coupling device of the transport apparatus. This may prevent the object being transported or moved from moving in a transverse direction from the transport apparatus when the transport apparatus is slowing down in speed or indeed coming to a stop, or due to floor gradient or bumps on the floor or a number of other reasons. Such a mechanism may help prevent crashes from a wheeled object still moving, for example, in a transverse direction when the transport apparatus is slowing down or coming to a stop. Also importantly the transverse-restraining mechanism gives better control for movement and transportation of the object being moved. This is important when the wheeled objects being moved are not linked to a guidance system such as rails or an under floor guidance system that may limit the direction of movement of the objections. For example a rail system for wheeled objects connected to the rail guidance system may only allow wheeled objects to move forward or backwards.

In some embodiments the transport apparatus couples to a wheeled object and via the coupling mechanism pushes the wheeled object. In some embodiments the force to move the wheeled object is preferably via a coupling mechanism that extends from a transverse side of the transport apparatus. A transverse side of the apparatus being a side perpendicular to the forward direction when the transport apparatus is moving a wheeled object.

In some embodiments the forward-restraining mechanism comprises a bar configured a pre-set distance in a forward direction of the engaging portion of the coupling device, of the transport apparatus, when the coupling device is in a coupled configuration. The bar therefore may act as an obstruction to the forward movement of the wheeled object coupled and being moved such that the wheeled object being moved cannot go beyond the pre-set distance from the transport apparatus. Thus this mechanism helps control the movement of the wheeled object being moved to correspond closely with the movement of the transport apparatus. The bar of the forward-restraining device is an easy to manufacture example of a suitable means to manufacture a forward restraining mechanism.

In some embodiments the forward-restraining mechanism is configured to move between at least,
- a first coupled configuration wherein the coupling device is configured to enable coupling with a wheeled object, such that movement of the transport apparatus moves the wheeled coupled object and the forward-restraining mechanism is positioned a pre-set distance from the engaging portion of the coupling device in the forward direction, and,
- a second non-coupled configuration wherein the coupling device is configured not to enable coupling with a wheeled object, such that movement of the transport apparatus does not move the wheeled object via the coupling device, and the forward-restraining mechanism is configured not to restrain forward movement of a wheeled object. Having at least two configurations allows the forward-restraining mechanism to control the wheeled object being moved when the wheeled object is coupled to the transport apparatus and then to be moved out of the way so the transport apparatus can move without causing movement of a wheeled object.

In some embodiments the forward-restraining mechanism and the engaging portion of the coupling device are configured to move between the at least first coupled configuration and second non-coupled configuration. In some embodiments the forward restraining mechanism and the engaging portion of the coupling device are configured to move simultaneously between the at least first coupled configuration and second non-coupled configuration. In some embodiments the forward-restraining mechanism and the engaging portion of the coupling device are attached that moving one also moves the other and thus the movement is simultaneous.

In some embodiments the transverse-restraining mechanism comprises a bar. Like in some embodiments of the forward-restraining mechanism, the transverse-restraining mechanism may comprise a bar. A bar is a simple feature to manufacture but can be configured to be effective to prevent unwanted transverse movement of a wheeled object coupled to the transport apparatus.

Aptly in some embodiments, the transverse-restraining mechanism comprising a bar further comprises that in at least one configuration the bar of the transverse-restraining mechanism is configured parallel with the direction of travel. Aptly in some embodiments, the transverse-restraining mechanism comprising a bar further comprises that in at least a coupled configuration the bar of the transverse-restraining mechanism is configured parallel with the direction of travel of the transport apparatus.

In some embodiments the forward-restraining mechanism comprises a resilient material. In some embodiments the transverse-restraining mechanism comprises a resilient material. In some embodiments the bumper comprises a resilient material. In some embodiments the forward-restraining mechanism comprises a resilient material. Have a resilient material at points where contact between the transport apparatus and a wheeled object may help to soften the impact and cause less damage or shaking to the wheeled object on movement.

It is foreseen that in some embodiments that the transverse-restraining mechanism will be configured to be movable between at least two configurations.

In some embodiments the transverse-restraining mechanism is configured to be movable between;
- a first coupled configuration wherein the coupling device is configured to enable coupling with a wheeled object, such that movement of the transport apparatus moves the coupled wheeled object and the transverse-restraining mechanism is positioned a pre-set distance from the engaging portion of the coupling device in the transverse direction, and,
- a second non-coupled configuration wherein the coupling device is configured not to enable coupling with a wheeled object, such that movement of the transport apparatus does not move the wheeled object via the coupling device, and the transverse-restraining mechanism is configured not to restrain movement of a wheeled object. Having at least two configurations allows the transverse-restraining mechanism to control the wheeled object being moved when the wheeled object is coupled to the transport apparatus and then to be moved out of the way so the transport apparatus can move without causing movement of a wheeled object.

In some embodiments of the transverse-restraining mechanism that in at least one configuration comprises a bar configured parallel with the direction of travel in a coupled configuration, in the second non-coupled configuration the longitudinal length of the bar of the transverse-restraining mechanism is vertical in orientation when the transport apparatus is in use.

In specific embodiments the engaging portion of the coupling device, the portion of the coupling device that is configured to enable engagement with a wheeled object, comprises a flat surface. A flat surface for the engaging portion of the coupling device may allow good contact between the engaging portion of the coupling device of the transport apparatus and the contact surface of the wheeled object, for example a flat side or back surface of the wheeled object or indeed also if to a wheel of the wheeled object, to be moved.

In some embodiments the engaging portion of the coupling device comprises a keyplate. In some embodiments the keyplate is configured to be releasably attachable. In some embodiments the keyplate is configured to be releasably attachable to the main body of the coupling device. In some embodiments the keyplate is releasably attachable to the coupling device. This allows different keyplates to be used for different objects to be moved, to ideally have good contact to assist applying a force and moving the different objects of different shapes.

In some embodiments the coupling device is configured to change the keyplate automatically. In some embodiments the coupling device is configured to change the keyplate automatically when instructed to do so.

In some embodiments the transport apparatus comprises a plurality of keyplates. In some embodiments the transport apparatus comprises a plurality of different keyplates. In some embodiments the transport apparatus comprises a plurality of keyplates wherein the coupling device is configured to enable automatically exchange of the keyplate in use with another as required. In some embodiments the plurality of keyplates are releasably fixed to the main body of the transport apparatus. Ideally the plurality of keyplates are releasably fixed in a location within reach of the coupling device to be able to automatically exchange the keyplates as required.

This advantageously allows the transport apparatus to exchange the keyplate being used with another more suitable keyplate for a different wheeled object to be moved.

In some embodiments the coupling device comprises at least one extending arm, that the at least one extending arm is configured to move between the first and second said configurations.

In some embodiments the at least one extending arm comprises any one of or any combination of: an engaging portion of the coupling device; a forward-restraining mechanism; or a transverse-restraining mechanism.

In some embodiments the at least one arm of the coupling device is driven. Advantageously this enables the arm to move as required. The power to drive the arm may be by, for example, an electric motor, controller by the controller of the transport apparatus. In turn the controller of the transport apparatus may receive instructions communicated to it, via for example wireless communication, from the controller of an object transport system, as in turn directed by a user for example.

In some embodiments one or more segments of the at least one arm are driven. In some embodiments at least two segments of the at least one arm are driven. This advantageously may allow good flexibility of movement to the arm of the coupling device, that the coupling device can reach different releasably attachable keyplates, and in addition or alternatively reach different configured wheeled objects to be coupled to.

In some embodiments the coupling device comprises a belt system attached to at least one segment of the at least one arm and the keyplate of the coupling device. This may ensure that the keyplate is always maintained in a desired configuration, for example, a horizontal configuration. Other means to ensure that the keyplate is maintained in a horizontal configuration, if desired, or other particular configuration, can be used, for example a driven rotation of the keyplate. In some embodiments the coupling device comprises a driven rotation mechanism configured to rotate the keyplate mounted on the coupling device.

In some embodiments the transport apparatus comprises more than one coupling device. In some embodiments the coupling device comprises at least two extending arms.

In some embodiments the coupling device is configured to extend from the body of the transport apparatus from a left side, or a right side, or both a left side and a right side of the transport apparatus, in relation to the forward direction of the transport apparatus.

In specific embodiments the engaging portion of the coupling device, the portion of the coupling device that is configured to enable engagement with a wheeled object, comprises a vertical surface. A vertical surface for the engaging portion of the coupling device may allow good contact between the engaging portion of the coupling device of the transport apparatus and the contact surface of the wheeled object, for example a flat vertical side or back surface of the object or indeed also if to a wheel of the wheeled object to be moved.

In some embodiments the engaging portion of the coupling device is configured to engage with a back surface of the wheeled object. The back surface being the opposition surface from the direction of travel when the transport apparatus is moving an object. Advantageously this allows the transport apparatus to push one or more wheeled objects. Pushing is easier than lifting or pulling.

In specific embodiments the engaging portion of the coupling device, the portion of the coupling device that is configured to enable engagement with a wheeled object, comprises a wheel. In specific embodiments the engaging portion of the coupling device, the portion of the coupling device that is configured to enable engagement with a wheeled object, comprises a free moving wheel. A wheel for the engaging portion of the coupling device may allow good contact between the engaging portion of the coupling device of the transport apparatus and the contact surface of the wheeled object to be moved, for example a flat vertical side or back surface of the object or indeed also if to a wheel of the wheeled object to be moved. Two free moving wheels contacting each other will have less friction than one free moving wheel contacting a fixed surface. In some embodiments it is foreseen that the coupling device may contact the wheel of a wheeled object, when pushing the wheeled object.

In some embodiments the engaging portion of the coupling device is configured to engage with a wheel of a wheeled object.

In some embodiments forward-restraining mechanism comprises an arm that may protrude from the body of the transport apparatus. In some embodiments the forward-restraining device is configured to be movable between a coupling configuration when the forward-restraining device protrudes from the body of the transport apparatus, and a non-coupling configuration wherein the forward-restraining device does not protrude from the body of the transport apparatus, or is retracted within the body of the transport apparatus. In some embodiments where the forward-restraining device protrudes from the body of the transport apparatus the forward-restraining device protrude from a transverse side of the body of the transport apparatus. In some embodiments wherein the forward-restraining device is configured to be movable between a coupling configuration when the forward-restraining device protrudes from the body of the transport apparatus, and a non-coupling configuration wherein the forward-restraining device does not protrude from the body of the transport apparatus, or is retracted within the body of the transport apparatus, the forward-restraining device in the coupled configuration protrudes from a transverse side of the body of the transport apparatus. In some embodiments the forward-restraining device is configured such that in a protruding or coupling configuration it may act as a barrier to the forward movement of a wheeled object that is coupled to the transport apparatus. In specific embodiments the forward-restraining mechanism is configured such that when in a non-coupled configuration or retracted configuration it is configured such that it does not block the forward direction path of a wheeled object that may be positioned to the side of the transport apparatus.

In specific embodiments, the forward-restraining mechanism; and the transverse-restraining mechanism, and; the engaging portion of the coupling device, are attached to each other, or any combination thereof being attached to another.

In some embodiments the forward-restraining mechanism, and the transverse-restraining device and the engaging portion of the coupling device are configured to move between the at least first coupled configuration and second non-coupled configuration. In some embodiments the forward restraining mechanism, and the transverse-restraining device, and the engaging portion of the coupling device are configured to move simultaneously between the at least first coupled configuration and second non-coupled configuration. In some embodiments the forward-restraining mechanism, and the transverse-restraining device, and the engaging portion of the coupling device, are attached that moving one also moves the others and thus the movement is simultaneous.

In some embodiments the transport apparatus comprises wherein the forward-restraining mechanism and the transverse-restraining mechanism are configured to move simultaneously between the extended or coupled configuration and the non-extended or non-coupled configuration.

In some embodiments the transport apparatus comprises wherein the forward-restraining mechanism and the transverse-restraining mechanism are attached to each other, and are configured to move simultaneously between the extended or coupled configuration and the non-extended or non-coupled configuration.

In some embodiments the transport apparatus comprises wherein the forward-restraining mechanism and the transverse-restraining mechanism and the coupling device are attached to each other, and are configured to move simultaneously between the extended or coupled configuration and the non-extended or non-coupled configuration

Such simultaneous movement may enable easy use between the coupled configuration and the non-couple configuration.

In some embodiments the bar of the transverse-restraining mechanism is configured to automatically move from a parallel orientation when in the coupled configuration to a vertical orientation when in the non-coupled configuration. This may allow the transverse-restraining mechanism to automatically act as a barrier when required.

In some embodiments the coupling device extends between the at least,
- first coupled configuration, wherein the coupling device is configured to enable engagement with a wheeled object, such that movement of the transport apparatus moves a coupled wheeled object and,
- a second non-coupled configuration wherein the coupling device is configured not to enable engagement with a wheeled object, such that movement of the transport apparatus does not move the wheeled object via the coupling device;
by at least one arm, that is configured to be movable between the first and second said configurations.

In specific embodiments the at least one arm of the coupling device is an extending arm. The extending function of the at least one arm may be by length or orientation that in a coupled configuration, the arm extends or reaches further from the transport apparatus such that at least the engaging portion, of the coupling device is further from the main body of the transport apparatus then when in a non-coupled configuration.

In specific embodiments the at least one arm of the coupling device comprises a telescopic arm. Having the at least one arm of the coupling device be a telescopic arm would be efficient by saving space, requiring less of a footprint.

In specific embodiments the at least one arm of the coupling device comprises at least two segments that pivot to one another. This may enable the arm to extend. Thus in some embodiments wherein the engaging portion of the coupling device is configured at a distal end of the at least one arm, the engaging portion of the coupling device may be extended or retracted, from or to the main body of the transport apparatus.

In some embodiments a pivoting segments of the arm or coupling device may move in two degrees of movement. In other embodiments one or more pivoting segments of the arm or coupling device may move in three degrees of movement.

In some embodiments the pivot joints or segments of the arm or coupling device can move back and forth, 360 degrees around an axis on a single plane.

In some embodiments the pivot joints or segments of the arm or coupling device can move back and forth, 360 degrees around an axis on more than one plane, for example two planes. This allows even more flexibility of movement.

In specific embodiments the pivot joints or segments of the arm or coupling device may comprise different planes of movement. Thus one pivot joint may enable left and right and another forward and back. In specific embodiments the coupling device comprises at least two pivot joints of different planes of motion.

In specific embodiments the at least one arm of the coupling device comprises at least two segments that pivot to one another, in one plane of motion. This may enable the arm to easily extend. Thus in some embodiments wherein the engaging portion of the coupling device is configured at a distal end of the at least one arm, the engaging portion of the coupling device may be easily extended or retracted, from or to the main body of the transport apparatus.

In specific embodiments the at least one arm of the coupling device comprises at least two segments that pivot to one another, in more than one plane of motion. This may enable the arm to easily extend. Thus in some embodiments wherein the engaging portion of the coupling device is configured at a distal end of the at least one arm, the engaging portion of the coupling device may be easily extended or retracted, from or to the main body of the transport apparatus. This may enable a wide range of motions of the coupling device to enable engagement with a wider range of shaped objects.

In specific embodiments the at least one arm of the coupling device comprises at least three segments that pivot to one another, in one or more planes of motion. This may enable the arm to easily extend. Thus in some embodiments wherein the engaging portion of the coupling device is configured at a distal end of the at least one arm, the engaging portion of the coupling device may be easily extended or retracted, from or to the main body of the transport apparatus. This may enable a wide range of motions of the coupling device to enable engagement with a wider range of shaped objects.

In specific embodiments the engaging portion of the coupling device is configured at a distal end of the at least one arm of the coupling device. The skilled person would understand by the term "at a distal end" that engaging portion need not necessarily be at the very end of the arm but means near to the distal end of the at least one arm of the coupling device.

In specific embodiments the transverse-restraining mechanism of the coupling device is configured at a distal end of the at least one arm of the coupling device. The skilled person would understand by the term "at a distal end" that transverse-restraining mechanism need not necessarily be at the very end of the arm but means near to the distal end of the at least one arm of the coupling device.

In specific embodiments the forward-restraining mechanism of the coupling device is configured at a distal end of the at least one arm of the coupling device. The skilled person would understand by the term "at a distal end" that forward-restraining mechanism need not necessarily be at the very end of the arm but means near to the distal end of the at least one arm of the coupling device.

In specific embodiments a segment of the at least one arm comprises any one or more of: the engaging portion of the coupling device; the forward-restraining mechanism; and/ or, the transverse-restraining device.

In specific embodiments a segment of the at least one arm comprises: the engaging portion of the coupling device; the forward-restraining mechanism; and, the transverse-restraining device.

In specific embodiments wherein a segment of the at least one arm comprises: the engaging portion of the coupling device; the forward-restraining mechanism; and, the transverse-restraining device, the segment of the at least one arm, comprising the engaging portion of the coupling device; the forward-restraining mechanism; and, the transverse-restraining device,
is the most distal segment of the at least one arm of the coupling device.

In specific embodiments wherein a segment of the at least one arm comprises: the engaging portion of the coupling device; the forward-restraining mechanism; and, the transverse-restraining device, the segment of the at least one arm, comprising the engaging portion of the coupling device; the forward-restraining mechanism; and, the transverse-restraining device,
is configured to have a longitudinal axis parallel to the direct of travel of the transport apparatus when moving an object, in the coupled configuration at least.

In specific embodiments wherein a segment of the at least one arm comprises: the engaging portion of the coupling device; the forward-restraining mechanism; and, the transverse-restraining device, the segment of the at least one arm, comprising the engaging portion of the coupling device; the forward-restraining mechanism; and, the transverse-restraining device,
Is configured to enable turning about its longitudinal axis.

In specific embodiments wherein a segment of the at least one arm comprises: the engaging portion of the coupling device; the forward-restraining mechanism; and, the transverse-restraining device, the segment of the at least one arm, comprising the engaging portion of the coupling device; the forward-restraining mechanism; and, the transverse-restraining device,
Is shorter in length than other segments of the at least one arm of the coupling device.

In some embodiments at least two of the segments of the at least one arm are configured that when the said two segments pivot about an axis it causes the two said segments to move in a transverse direction to the direction of travel of the transport apparatus.

In specific embodiments the transport apparatus comprises a sensor.

In some embodiments the sensor is an object locating sensor. Thus advantageously the controller of the apparatus, or the controller of the system of the transport apparatus, or the user of the transport apparatus can locate accurately the position of a wheeled object in order to couple with the wheeled object or not, moving passed the wheeled object without moving the wheeled object. In some embodiments the controller is configured to memorise where the located object is located.

In specific embodiments the at least one arm of the coupling device further comprises a sensor. A sensor may be to detect the location and or correct coupling of an object to be potentially moved. The location of the sensor may vary, each location having its own advantageous. Having a sensor on the arm of the coupling device may allow a more accurate reading than if located further away. In specific embodiments the most distal segment of the at least one arm of the coupling device further comprises a sensor.

In specific embodiments the transport apparatus comprises a sensor. In some embodiments the sensor is a transport apparatus location sensor. Advantageously having a transport location sensor enables the transport apparatus or the controller of the transport apparatus, or a user of the transport apparatus, or the system controller of the transport apparatus, to know where the transport apparatus is located.

In some embodiments the keyplate of the coupling device comprises a sensor. In some embodiments the keyplate of the coupling device comprises an object locator sensor. This sensor may be to allow confirmation if the wheeled object to be moved is in position to be moved. In some embodiments the keyplate of the coupling device comprises a sensor, wherein the sensor comprises a pad mounted on a spring loaded switch or metal plate. In some embodiments the keyplate of the coupling device comprises a sensor, wherein the sensor comprises a pad mounted on a spring loaded switch, or metal plate, configured to indicate that an object to be moved is in position to be moved when the spring is compressed. This sensor pad if mounted on a spring loaded metal pad, could offer some compliance to the positioning and could be the link to the operation of the sensor to confirm to the control system that a trolley is present and located correctly.

In some embodiments the pre-set distance of the forward-restraining mechanism from the engaging portion of the coupling device is changeable. This may be to allow greater or less control over a wheeled object, or enable wheeled objects of different size, shape or configurations to be moved with the adequate control to move efficiently or safely.

In some embodiments the pre-set distance of the forward-restraining mechanism from the engaging portion of the coupling device is between 150 millimetres and 250 millimetres. In specific embodiments the pre-set distance of the forward-restraining mechanism from the engaging portion of the coupling device is between 200 millimetres.

In some embodiments the transport apparatus further comprises a guide. The guide may be configured on the side of the transport apparatus. The guide in some embodiments may be configured to be on the transverse side of the transport apparatus. The guide in some embodiments may be configured to be on the front or forward-facing side of the transport apparatus. The side orientation named is determined when the transport apparatus is moving an object in a forward direction. In practice in some embodiments it is foreseen the transport apparatus will push the wheeled object via the coupling device, that a force is exerted through the coupling device as the transport apparatus moves, to the wheeled object to be moved. It is foresee, in some embodiments, that the transport apparatus will be located to a transverse side of the wheeled object during moving the wheeled object hence transverse side guides may assist in steering the wheeled object to be moved. It is also foreseen that the transport apparatus could push the wheeled object to be moved by being located behind the wheeled object to be moved and hence in this situation front guides or bumpers may assist in the movement of the wheeled object to be moved, although this situation may not have the control given by the coupling mechanism of the present invention.

In some embodiments the guides comprise resilient, plastic or rubber material.

In some embodiments the transverse-restraining mechanism comprises a resilient material. In some embodiments the forward-restraining mechanism comprises a resilient material. In some embodiments the coupling device comprises a resilient material.

In an aspect of the present invention there is provided a transport apparatus for transporting objects, for example wheeled objects, in an object handling system, the transport apparatus comprising:
- a drive means for moving the transport apparatus;
- a coupling means configured to move between at least a first coupled configuration wherein the coupling means is configured to enable engagement with a wheeled object, such that movement of the transport apparatus enables movement of a coupled wheeled object and a second non-engaged configuration wherein the coupling means is configured not to enable engagement with a wheeled object, such that movement of the transport apparatus does not move a wheeled object via the coupling means;
- a control means to control the movement of the transport apparatus and the movement of the coupling means between the coupled and non-coupled configurations.

In some embodiments the coupling means is a coupling device as herein described.

In some embodiments the drive means is any suitable drive means or mechanism suitable to enable moving of the transport apparatus.

In some embodiments the control means is any control means or controller configured to control the movement of the transport apparatus or the moving of the coupling means or coupling device.

In another aspect of the present invention there is provided an object handling system comprising at least one transport apparatus as herein described and at least one wheeled object, and a controller.

In some embodiments of the object handling device the controller is in communication with the at least one transport apparatus. In specific embodiments of the object handling device the controller is in wireless communication with the at least one transport apparatus. In some embodiments the communication between the controller of the system and the at least one transport apparatus is configured to enable the controller to send instructions to the transport apparatus to direct movement of the transport apparatus and / or the coupling device of the at least one transport apparatus. In some embodiments the communication between the controller of the system and the at least one transport apparatus is configured to enable the controller to receive information from any sensors on the transport apparatus.

In some embodiments of the object handling system, the at least one wheeled object comprises, wheels attached to a frame. In some embodiments of the object handling system, wherein the at least one wheeled object comprises wheels attached to a frame, the said wheels are free moving wheels. In some embodiments the wheels of the wheeled object will be free to rotate when coupled to the transport apparatus.

In some embodiments of the object handling system the wheeled objects comprise 4 wheels. In alternative embodiments other number of wheels may be present.

In some embodiments where the wheeled object has some wheels that are fixed in the direction of travel the coupling may be place such that the axle of the fixed wheels of the apparatus and the axle of the fixed wheels of the wheeled object lie along a common vertical plane.

In some embodiments of the object handling system, that the at least one wheeled object comprising wheels attached to a frame, is a trolley. Ideally the trolley comprises a partial enclosed area configured for storing other objects.

In some embodiments of the object handling system the wheeled object comprises an identification marker.

In some embodiments of the object handling system, there comprises a guidance means, for example a track, or an underfloor guidance means, or a rail; or any combination of the before said guidance means.

In some embodiments of the object handling system, there comprises at least one sensor. In some embodiments of the object handling system, that comprises at least one sensor, the at least one sensor comprises a transport location sensor. In some embodiments of the object handling system, that comprises at least one sensor, the at least one sensor comprise a wheeled object, or trolley, location sensor. This location sensor may be position at the front of the transport apparatus in some embodiments. In alternative embodiments the wheeled object location sensor may be position at other locations of the transport apparatus for example on or near the coupling device. In specific embodiments the coupling device comprises a wheeled object location sensor.

In some embodiments, the transport apparatus comprises a rechargeable battery to power the drive system.

In some embodiments of the transport handling system there further comprises a recharging means, or recharging station, to recharge the transport apparatus to power the drive system.

In another aspect of the present invention there is provided a method of moving a wheeled object comprising the step of using a transport apparatus as herein described.

In another aspect of the present invention there is provided a method of moving a wheeled object comprising the step of:
- providing a transport apparatus as herein described;
- positioning the transport apparatus in a transverse location to a wheeled object;
- extending a coupling device of the transport apparatus such that the coupling device couples with a wheeled object, wherein upon forward movement of the transport apparatus an engaging portion of the coupling device will engage with a surface of the wheeled object causing a force to be exerted upon the wheeled object when the transport apparatus moves in at least a forward direction.

In some embodiments of the method of moving a wheeled object wherein comprises the step of extending the coupling device further comprises the step of extending at least one arm of the coupling device.

In some embodiments of the method of moving a wheeled object comprising, the step of extending the coupling device that comprises the step of extending at least one arm of the coupling device, also further comprises the step of:
.-extending the forward restraining mechanism such that the forward-restraining mechanism is a pre-set distance, in the forward direction, from an engaging portion of the coupling device.

In some embodiments of the method of moving a wheeled object wherein, the step of extending the coupling device that comprises the step of extending at least one arm of the coupling device, also further comprises the step of:
.-extending the forward-restraining mechanism such that the forward-restraining mechanism is a pre-set distance, in the forward direction, from an engaging portion of the coupling device.

In some embodiments of the method of moving a wheeled object wherein, the step of extending the coupling device that comprises the step of extending at least one arm of the coupling device, also further comprises the step of:
.-extending the transverse-restraining mechanism such that the transverse-restraining mechanism is a pre-set distance, from an engaging portion of the coupling device.

In some embodiments of the method of moving a wheeled object comprising, the step of extending the coupling device that comprises the step of extending at least one arm of the coupling device, and also further comprises the step of extending the transverse-restraining mechanism such that the transverse-restraining mechanism is a pre-set distance, from an engaging portion of the coupling device, also comprises the step of:
- selecting the pre-set distance between the engaging portion of the coupling device and the forward-restraining mechanism.

In some embodiments of the method of moving a wheeled object further comprises the step of:
- selecting the pre-set distance between the engaging portion of the coupling device and the forward-restraining mechanism to be in the range of 150 millimetres and 250 millimetres.

In some embodiments of the method of moving a wheeled object comprising, the step of extending the coupling device that comprises the step of extending at least one arm of the coupling device, also further comprises the step of:
.-extending the transverse-restraining mechanism such that the transverse-restraining mechanism is a pre-set distance, is configured in a parallel direction to the direction of travel of the transport apparatus.

In some embodiments of the method of moving a wheeled object, comprises the step of: moving the transport apparatus, or a wheeled object, along a track.

In some embodiments of the method of moving a wheeled object, comprises the step of: -placing the coupling device such that the axle of at least one wheel of the transport apparatus and the axle of at least one wheel of the wheeled object lie along a common vertical or horizontal plane. This may be advantageous should the wheels of the wheeled object have limited steer direction.

Ideally in some embodiments the coupling device when in a non-coupled configuration is configured to enable a transport apparatus to travel adjacent to a wheeled object without moving the wheeled object.

By enabling the transport apparatus to move along side, in a transverse orientation, of a guide system for example a track, or a wheeled object, without engaging with the wheeled object, or guidance system, provides the advantage of enabling improved control of the position of wheeled objects, while also avoiding the necessity of large drive and stop mechanisms, thereby reducing the cost of the transport apparatus and/ or the transport system.

In some embodiments the coupling means, or coupling device may be movable relative to an upper surface of a body of the transport apparatus between said first configuration, in which the engaging means, or device protrudes from the upper surface of the body of the transport apparatus and said second configuration.

This provides the advantage of enabling simple construction and operation of the coupling means.

In some embodiments the coupling means or device may be adapted to engage a wheeled object, or trolley, adjacent a lower surface of transport apparatus.

In some embodiments a detector means may be adapted to detect a marker on a lower surface of at least one wheeled object. This provides the advantage of enabling simple and inexpensive construction of the transport apparatus.

In some embodiments there are a plurality of proximity detectors adapted to detect a plurality of features on an at least one wheeled object

In some embodiments the control means, or controller of the transport apparatus comprises communicating means configured to enable communication with drive system and the coupling device to enable movement of the drive system and/ or the coupling device. The person skilled in the art would be familiar with how these communication system will work.

In some embodiments the control means, or controller of the transport apparatus comprises communicating means configured to enable communication with drive system and the coupling device to enable movement of the drive system and/ or the coupling device and/ or any sensors of the transport apparatus.

In some embodiments the control means, or controller of the transport system comprises communicating means configured to enable communication with at least one the transport apparatus. In some embodiments the control means, or controller of the transport system comprises communicating means configured to enable communication at least one transport apparatus and a guidance means. Thus a control means of a transport system can control the movement of the transport apparatus and the coupling mechanism of the transport apparatus and also receive information from any sensors.

An embodiment of the invention will now be described generally, by way of example only and not in any limitative sense, in order to understand how an embodiment of the invention may work. In some embodiments the transport apparatus may be a wheel vehicle and may have a power source such as a battery to power a drive system. In some embodiments the transport apparatus may communicate wirelessly with a controller of a system in order to receive instructions for, where to move to, when to extend the coupling device to, what wheeled objects are to be moved and where to move the wheeled object to, and then when to retract the coupling device to un-couple or dis-engage from the wheeled object moved. The transport apparatus, in such examples, thus may be instructed to move to a transverse side of a wheeled object to be moved and park, remain stationary, such that the transport apparatus may be in close enough location that on extension of the coupling device, the coupling device can couple with the wheeled object to be moved. Thus the transport apparatus may receive further instructions from the system controller to move, taking with it, or moving also the coupled wheeled object. In some instances, once the wheeled object, is moved to the desired location, the transport apparatus may be instructed to stop and uncouple, from the wheeled object, retracting the coupling device. Ideally, in some embodiments, the retracting of the coupling device may be such that further movement of the transport apparatus does not move the wheeled object, any further. Ideally, in some embodiments, in the object transport system the wheeled objects may be trolleys. In any embodiments where there are guidance means ideally the transport apparatus may be moved to complement any guidance means present.

In some embodiments, the controller of the object handling system may have a supervisory control system which may be used to supervise and coordinate operation of multiple queues of wheeled objects via a queue control system. In some embodiments the controller of the object transport system may control each individual transport apparatus in the system. In some embodiments the controller of the object handling system may receive information from any sensors on the transport apparatus or located elsewhere in the object handling system. Thus, in some embodiments, the supervisor control system can also permit coordination of multiple transport apparatus and coupling devices with or without further guidance means for transport of wheeled objects, or stored including queuing before loading, unloading and movement of trolleys along a queue.

An example of an operation of the system will now be described generally by way of example only, and not in any limitative sense, in order to understand how an embodiment of the invention may work.

In some embodiments, in order to load wheeled objects, for example trolleys to a queue, the wheeled object or trolleys, can either be presented manually, or automatically via a transport apparatus to a queue input. In some embodiments the transport apparatus may then move to position a coupling device to a wheeled object, for example to a trolley, at the queue input, and then may engage with the wheeled object to push the wheeled object into the queue. In some embodiments when the wheeled object is in the desired location in the queue, the coupling device may disengage, or de-couple, from the wheeled object to enable the transport apparatus to move away, from the wheeled object, to may be, process other tasks.

In order to manage the position of wheeled objects in the or a queue and maximise storage and throughput, it may be desired to move wheeled objects from the body of the queue to take up free space which becomes available at the front of the queue as wheeled objects are moved from the front of the queue. This then enables more wheeled objects to be added at the input end of the queue. As the transport apparatus may move along the queue, it may identify the respective positions of wheeled objects along the queue by means of a wheeled object sensing device and/ or any location sensors. In some embodiments the transport apparatus may move one or more wheeled objects from the body of the queue towards the outfeed end of the queue to free up space.

In some embodiments, in order to transfer wheeled objects between queues, the transport apparatus may be fitted with coupling devices as herein described to guide and hold wheeled objects and then may be move between stations at the input and output ends of queues, or other desired locations. In some embodiments, each station may have a unique identifier at the input and output of each queue to assist transfer of wheeled objects for a transport apparatus. In some embodiments, any identifiers may be identified by sensors on, for example the transport apparatus.

In different embodiments different combination of queues and wheeled objects and transport apparatus can be foreseen.

It will be appreciated by persons skilled in the art that the examples and embodiments have been described by way of example only, and not in any limitative sense, and that various alterations and modifications are possible without departure from the scope of the invention as defined by the appended claims.

An example of how the Coupling mechanism works.

The coupling arrangement is described here as an example only, certain features are common with the example shown in Figure 6A and 6B.

In some embodiments the coupling device in the transport apparatus may provide the following functions:
1. presenting a push force A in the direction of travel of the wheeled object to be moved.
2. preventing the wheeled object moving forward away from the transport apparatus when the transport apparatus is decelerating (Force D).
3. preventing (Force B) the wheeled object from moving transverse or perpendicular or at an angle to the direction of travel (Arrow F).
4. Retracting from the path of the wheeled object, if the apparatus is required to travel beyond a wheeled object or in a reverse direction.

In some embodiments Function 2 may not be required when the deceleration rate of the transport apparatus is less than the deceleration rate of the wheeled object.

In some embodiments Function 3 may also be provided by any external mechanical guidance, for example a track, and is not necessarily needed if the transport apparatus always remains in the track or other mechanical guidance.

Ideally in some embodiments the coupling device is configured to enable connection to a wheeled object and apply a force to a wheeled object in the direction of movement. (FORCE A as seen in Figures 6A and 6B).

In some embodiments to prevent forward movement of the wheeled object from the transport apparatus when decelerating (FORCE D as shown in Figures 6A and 6B) and to ensure that the wheeled object or trolley does not move away from the transport apparatus when a track is not present another force may be exerted on the wheeled object from the coupling device (FORCE B shown Figure 6B).

In some embodiments the FORCE C (FIGURE 6B) may be a reaction force provided by the transport apparatus equal and opposite to FORCE D. A separate mechanism can be used to provide each of these three functions or in some cases the functions can be combined into fewer mechanisms depending on the shape of the wheeled object or trolley features that the coupling connects to. In some situations the application of FORCE B will provide sufficient frictional force perpendicular to it in the same horizontal plane so that separate means of providing FORCES A and D are not required.

In embodiments where the transport apparatus always travels within a guide track or rail the steering system need not form part of the transport apparatus. In such embodiments the coupling arrangement may also be simplified to constrain movement in the direction of the track only. (The track may provide constraint perpendicular to the track in the horizontal plane.)

By enabling the transport apparatus to leave a particular track, in some embodiments, it can move to another track and move wheeled objects in that track or transfer a wheeled object to that track. This has the advantage of not requiring an apparatus in each track. They can be shared between different tracks reducing the number required, thus being more efficient, saving energy and expense.

In some embodiments in a typical application, a wheeled object would be positioned in a short section of track manually. The steering transport apparatus would approach this section of track and travel alongside the track and connect to the wheeled object. The track can also be used as a guide for alignment of the apparatus. The coupling device would move out to carry out function 2. The guide bar, having engaged on features on the rear of the wheeled object if necessary.

By the term "adjacent" and the like, as used herein this means next to or adjoining and as used herein includes two items positioned close enough to engage with or contact with, for example when or should, the coupling means be in an extended coupling configuration.

By the term "forward" and the like, as used herein this is used to mean the usual direction of movement when in use, of the transport apparatus or object when being moved by the transport apparatus it refers to, as would be known to a person skilled in the art.

By the term "free moving wheel" and the like, as used herein this is used to mean that the wheel is able to continue turning or spinning after disengagement from any drive mechanism or force.

By the term "telescopic" and the like, as used herein, this is used to mean having or consisting of concentric tubular sections designed to slide into one another.

By the term "transverse" and the like, as used herein, this is used to mean the side of an item in relation to the forward direction of the item and includes across the forward direction by at least some degree, as in not parallel with the forward direction.

By the term "trolley" and the like, as used herein, this is used to mean a container or frame comprising wheels. A trolley is one example of an object that may be moved by a transport apparatus of the present invention or be moved within a system of the present invention, or by a method of the present invention.

Any one or more features of any aspect, embodiment or example may be combined with any one or more features of another aspect, embodiment or example described herein.

Some examples will now be further described with reference to the figures in which:
Figure 1 shows an example of a transport apparatus; and examples of wheeled objects, within an example of a transport system.
Figure 2 shows an example of a transport apparatus and an example of a wheeled object;
Figure 3 shows an example of a coupling device of the present invention;
Figure 4 shows another example of a coupling device of the present invention different to that shown in Figure 3;
Figure 5A and 5B shows an example of a coupling device in two different configurations with an example of a transport apparatus and an example of a wheeled object;
Figure 6A shows an example of the coupling device, with a track;
Figure 6B shows an example of the coupling device, without a track;
Figure 7 shows a drive device suitable with the present invention;
Figure 8 shows an example of an object handling system;
Figure 9A and 9B shows an example of a wheeled object, for example a trolley, configured for movement along a track, and in queue.

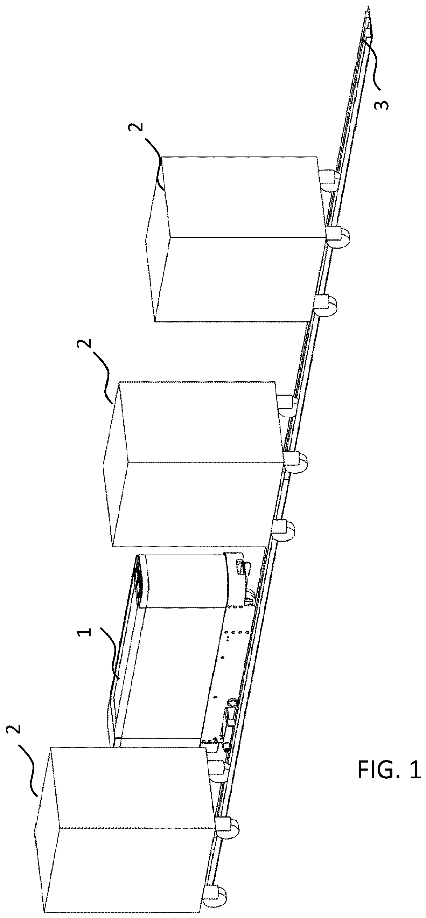

Figure 1 shows one example of a transport system. In this transport system there is as shown a rail mechanism 3, wheeled objects 2, to potentially to be moved by a transport apparatus 1. In this example the wheeled objects 2 are containers on wheels, or trolleys. The wheels of the wheeled objects 2 in this example are free spinning. In this example there is also a rail mechanism 3 or a guide mechanism which guides the direction of the trolleys 2. This aids ordered movement of the trolleys. The transport apparatus 1 in this example is able to move to the side of a wheeled object 2, for example a trolley, engage or couple with the wheeled object 2, to move the wheeled object 2. The transport apparatus 1 is able to engage or couple with the wheeled object 2 from a side position to the wheeled object 2. The transport apparatus 1 is able to couple to a wheeled object, for example, trolley, by an extending coupling device. The rail 3 aids controlled movement of the wheeled objects 2. The transport apparatus 1, in this example and some embodiments, can engage or couple with the wheeled object 2 from either side of the wheeled object 2, to move the wheeled object 2. In embodiments where the transport apparatus comprises a forward-restraining mechanism, or a transverse-restraining mechanism, or both, the rail 3, or other guide means may not be necessary, as the forward-restraining mechanism and or the transverse-restraining mechanism aids control over the moving wheeled object 2 when coupled to the transport apparatus 1. However with the rail 3 or other such guiding structure, the transport apparatus 1 coupled to one wheeled object 2 is able to push along a number of wheeled objects 2 in the rail 3 by pushing the coupled wheel object 2 into the row of other wheeled objects 2 in the rail 3.

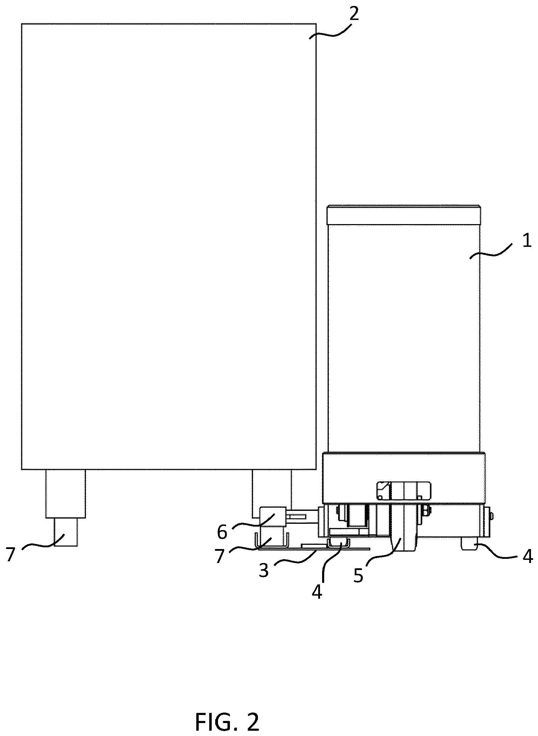

Figure 2 shows one example of a transport apparatus 1 and one example of a wheeled object 2 within a transport apparatus 1 in use. The transport apparatus 1 comprises wheels 4. Partly shown is a drive system 5. In this embodiment the drive system 5 comprises a steering mechanism too. Not shown in the figure as hidden from view within the transport apparatus is a controller configured to direct the movement of the transport apparatus 1 and the coupling device 6. The coupling device 6 is shown to be extended coupled configuration, (extended from a non-coupled configuration) behind the transport apparatus 1. Thus in the extended, coupled configuration the coupling device 6 protrudes from the transport apparatus 1, and therefore can couple with the wheeled object 2. A track 3 is shown providing guidance to the wheeled object 2, thus when moved within the rail 3 the movement is limited to two directions, back and forth for example. Thus in this figure 1 figure 2 example there are rails 3, an external guidance means, however in other embodiments of the present invention there need not be any external guidance means, and the transport apparatus 1 provides all the guidance required to move the wheeled object 2, when coupled to the transport apparatus 1.

In this example the wheeled object 2 is a trolley, a container with wheels 7. In figure 2 the transport apparatus 1 is located to a transverse side of the wheeled object 2 to be moved, to couple via the coupling device 6 from a side of the wheeled object 2. The coupling device 6 is extended from the transport apparatus 1 in a coupling configuration. In practice the coupling device 6 may be in an uncoupled, or retracted configuration when the transport apparatus is not coupled to a wheeled object, for example when moving between different wheeled objects 2 or indeed different rails 3 or different transport systems. When the coupling device is in a retracted position, for example behind the main body of the transport apparatus 1 this enables the transport apparatus to travel close to the side of various wheeled objects without obstruction, to position itself at a desired location, for example next to the wheeled object 2 that is to be moved. The transport apparatus can then park and extend the coupling device 6 as shown in figure 2, to couple to the desired wheeled object 2.

Also not seen in this example is a transport apparatus location sensing device, and an object location sensing device.

In other embodiments the guidance of the transport apparatus 1 can also be independent of the guidance of the wheeled object 2 using a separate guidance method such as a floor mounted magnetic strip or other remote guidance device such as a laser scanner that can determine the position and orientation of the transport apparatus 1 from features of the environment it moves within.

The transport apparatus 1 also incorporates a means of connecting, the coupling device 6, to the wheeled object 2 to be moved to enable the wheeled object 2 to be coupled and potentially moved.

The transport apparatus 2 may change its guidance method at different times depending upon the type of movement it is required to undertake. When it is used to move wheeled objects 2 in a queue, a mechanical rail or track 3 may be helpful or even required to maintain alignment of the wheeled objects when connecting and disconnecting to and from the transport apparatus 1 and to permit movement of a number of wheeled objects 2 at the same time by enabling the transport apparatus 1 the push one wheeled object 2, that then pushes the next wheeled object 2 to be moved in the queue.

When mechanical guidance 3 is used the transport apparatus 2 is not required to constrain or limit the travel of the wheeled object 2 other than in the direction of movement as this is the purpose of the track 3. When no track 3 is present a coupling that limits movement only in the direction of travel is required on the transport apparatus 1. This coupling will, in some applications, be required to move outside the travel path of the wheeled object 2 when it is not in use to permit the transport apparatus 1 to move alongside the wheeled object 2 without connecting to it or colliding with it.

In this example, it is important that the coupling device 6, when not in use, does not prevent the transport apparatus 1 from moving alongside a wheeled object 2, example, a trolley or trolleys without connecting to the trolleys.

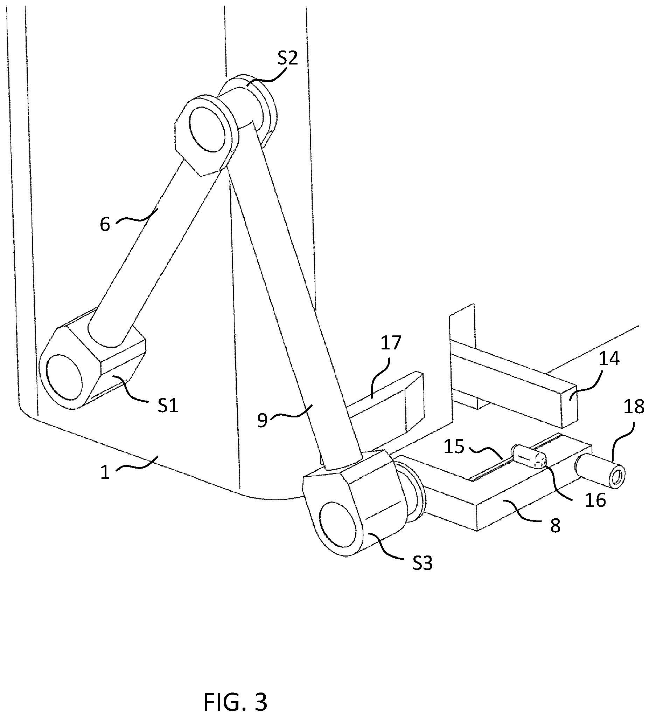

The Figure 3 example of a coupling device 6 shows a coupling device 6 with a multi-sectioned arm 9. The arm 9 comprises, in this example, three pivot points S1, S2 and S3. These are able to de driven such that they can pivot or turn and thus move the connecting arm portions in a particular direction. In this example the pivoting segments move in two degrees of movement each. They can rotate back and forth 360 degrees around the axis point on one plane. But this allows the multi-segment arm move in a large number of different locations and reaches. In this example the arm can extend from either side of the transport apparatus. In other embodiments one or more pivoting segments may move in three degrees of movement.

The movement of the pivoting segments S1, S2 and S3, may be driven by a motor (not shown in Figure 3). In this embodiment a keyplate 8 is removable attached to the third pivoting segment S3. The keyplate, or a portion thereof, in this example, is the portion of the coupling device that will engage with a wheeled object to enable force to be exerted on the wheeled object 2 to move the wheeled object 2 as the transport apparatus 1 moves. Ideally the transport apparatus is powered by a drive means not shown in figure 3. Ideally the drive means also comprises a steering means to be able to steer the transport apparatus. Ideally a controller (not shown in Figure 3) will communicate with the steering and drive means able to control the drive and steering of the transport apparatus 1 as required by a user.

In this Figure 3 embodiment the keyplate 8 is configured to comprise a transverse-restraining mechanism 15. The transverse-restraining means in this example comprises a resilient material. Also in this example the keyplate 8 of the coupling device comprises a sensor 16 and a bumper 18. The sensor 16 may enable feedback to whether a wheeled object 2 is correctly coupled or not. A bumper 18 may be used to easier push wheeled objects when coupling it not required.

Also shown in the Figure 3 embodiment is a guide 17 on the side of the transport apparatus 1. This guide 17 comprises a resilient material. The guide 17 may act to control the direction of the coupled wheeled object 2 by prevent transverse movement of the coupled wheeled object 2 in the direction of the transport apparatus 1.

In this example shown in Figure 3 the forward-straining mechanism 14 is separate from the keyplate 8 of the coupling device. In this example the forward-restraining mechanism 14 comprises an arm that may protrude from the main body of the transport apparatus 1. The forward-restraining device 14 is configured to be movable between a coupling configuration when the forward-restraining device 14 protrudes from the body of the transport apparatus 1, and a non-coupling configuration wherein the forward-restraining device 14 does not protrude from the body of the transport apparatus 1, or is retracted within the body of the transport apparatus 1. The forward-restraining device 14 is configured such that in a protruding or coupling configuration it may act as a barrier to the forward movement of a wheeled object 2 that is coupled to the transport apparatus 1. And when in a non-coupled configuration or retracted configuration it is configured such that it does not block the forward direction path of a wheeled object 2 that may be positioned to the side of the transport apparatus 1.

In practice the transport apparatus 1 would move to a transverse, or side position to a wheeled object 2 that is required to be moved. Ideally the transport apparatus 1 would park next to the wheeled object 2, thus be stationary for the extending of the coupling device 6. Once in position the coupling device 6 would be extended via the driven pivot segments S1 S2 S3 and the key plate 8 would be configured and positioned to partially surround a feature, for example the frame of the wheel of the wheeled object. In other embodiments this may be the wheel itself or another feature of the wheeled object 2. The forward-restraining mechanism would also move to the coupling configuration, thus protrude from the side of the main body of the transport apparatus 1, is configured to be in the forward path of the wheeled object 2. As the forward-restraining mechanism 14 is attached to the transport apparatus 1 it moves forward at the same speed of the transport apparatus 1 and thus in use usually does not block forward movement of a wheel object 2 coupled to the transport apparatus 1, but can do so should the coupled wheeled object 2 start to move ahead of the transport apparatus 1, for example should the transport apparatus 1 stop or slow down, especially if stops or slows down suddenly.

Likewise the transverse-restraining device 15 may work similarly, acting as a restraint should a coupled wheeled object start to move away from the transport apparatus 1.

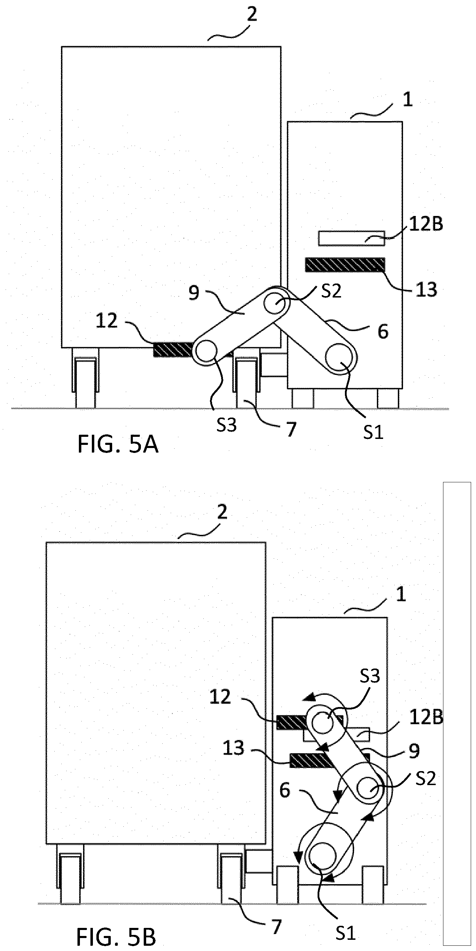

In this Figure 3 example the keyplate can be changed for different trolley types that have significantly different features such as height and physical features. The keyplate changeover can be automatically carried out by the coupling device. Figure 5 shows two keyplate locations mounted on the transport apparatus. These could also be releasably located adjacent to the coupling device on the transport apparatus, such that the coupling device can reach and exchange as required.

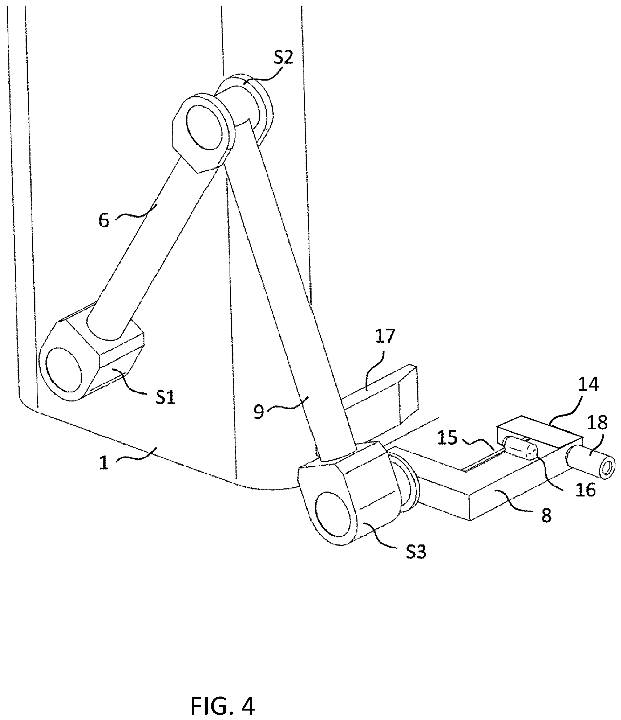

Figure 4 shows an example of the coupling device 6.

The coupling device 6 and arrangement shown in this example comprises an engaging portion or keyplate 8 mounted on a third pivoting joint, segment S3 of an arm 9, at the rear end of the transport apparatus 1. In this example the third pivoting joint segment S3 of the arm 9 has a longitudinal axis parallel to the direction of travel. The coupling device 6 is configured to enable connection to a feature on a wheeled object 2, to potentially move the wheeled object 2 when for example coupled, by the coupling device 6. In this example, as shown in Figure 2 as well, this is to the top section of the wheel 7 frame of the wheeled object 2, although in other examples and embodiments this connection could be to other locations of the wheeled object 2, potentially to be moved when coupled with the transport apparatus 1. In practice many wheeled objects 2 will have a rectangular configuration of a main body but not necessarily. It is the engaging portion of the coupling device 6, the keyplate 8 in this example that presents a force to the wheeled object 2, for example, trolley to move the wheeled object forwards.

In the Figure 4 example shown the arm is shown with three pivot type joint segments, S1, S2 and S3. In this example the segments S1, S2, S3 are driven, meaning that the segments S1, S2 S3 and connecting arms 9 etc are able to be moved by a motor (not shown) in a direction as desired or instructed, for example communicated via or by the controller. The segments S1 S2 S3 and connected arms, or sections of the arm 9 are also able to be held stationary in a desired position as instructed.

In some embodiments the third segment S3 is non-driven but is linked to segments S1 and S2 through a belt system that ensures the keyplate 8 is maintained in its original horizontal orientation. In other embodiments the third segment may be driven too. In some embodiments, when there is only a requirement for one keyplate the axis system can be simplified and a single horizontal axis can be used to move the keyplate to the retracted, open and closed positions. However in some embodiments there is a requirement for a plurality of keyplates. The keyplate 8 may be retracted within the body of the transport apparatus 1 so that it does not protrude, when not required.

Also shown in the Figure 4 embodiment the keyplate 8 of the coupling device 6 comprises the forward-restraining mechanism 14 and the transverse-restraining mechanism 15. When the transport apparatus 1 is coupled to a wheeled object 2, the keyplate 8 of the coupling device 6 as in this example, may partially surround the wheel 7 frame of the wheeled object 2, such that the forward restraining mechanism 14 is configured and able to be positioned in front of the wheel 7, or wheel 7 frame of the wheeled object 7. Thus when the forward-restraining mechanism 14 s positioned in front of a particular feature of the wheeled object 2, for example a wheel, or wheel frame, the forward-restraining mechanism may act as a barrier to the forward movement of the wheeled object 2 and thus prevent the wheeled object 2 running away, or moving too far away from the coupling device 6 or transport apparatus 1. In use, the keyplate itself will be moving along with the transport device and thus pushing the wheeled object in a direction. In such use the forward-restraining mechanism will also be moving thus the distance from the engaging portion of the keyplate 6 that is pushing the wheeled object 2, may be constant.

In some embodiments the position of the forward restraining device is variable.

In the Figure 4 example it is likely that the coupling device is extended and comes from behind the wheeled object to couple. This may require positioning of the coupling device via the transport apparatus 1 or driven arm(s) 9 to reach the final coupled position.

Also shown in the Figure 4 embodiment but not necessarily in other embodiments, is a sensor 16, a guide 17 on a side of the main body of the transport apparatus 1, and a bumper 18, or pusher. The bumper 18 may comprise a resilient material. The bumper 18 may aid pushing items like a wheeled object 2, by the transport apparatus 2. In this example the sensor 16 may indicate the location or not of a wheeled object 2, if coupled or not.

The skilled person will understand that the keyplate 8 may in other embodiments couple to different features of the wheeled object 2 and work in a similar way to when the keyplate 8 is partially surrounding the wheel 7 frame of the wheel object 2.

Figure 5A and 5B show an example of a transport apparatus 1 and an example of a wheeled object 2, that potentially the transport apparatus may move. Figure 5 and 5B also shows an example of the storage system for two different keyplates 12 and 13. In other embodiment a different number of keyplates 12 and 13 could be stored and used. There is shown in this example the storage space 12B on the transport apparatus 1 for the current keyplate 12 being used by the transport apparatus. Also shown is the stored keyplate 13. Ideally, as shown ideally the storage system for the keyplates 12 and 13 are within reach of the arm 9 of the coupling device 6. In this example the keyplates 12, 13 are releasably attachable to the back of the transport apparatus 1, and releasably attachable to the coupling device.

Figure 5A shows the coupling device 6 in a coupling configuration, with the arm 9 extended or protruding from the side of the main body of the transport apparatus 1. As can be seen the key plate 12 is attached to the coupling device 6. It is releasably attached in this embodiment.

In Figure 5B the coupling device 6 is about to replace the keyplate 12 back to the storage system and in particular the storage position 12B for the keyplate 12. To do this from the extended coupling configuration the controller (not shown) will communicate with the driven pivoting segments S1 S2 S3 to turn by the appropriate amount so that the arm 9 is not extended protruding out from the side of the body of the transport apparatus 1 but towards and finally at the storage position 12B for the keyplate 12. Attachment and release may be by various known means including using electromagnets. The coupling device 6 may be moved between the storage positions of various keyplates and thus various keyplates can be selected as required and used to make contact with various wheeled objects. The releasably attachment mechanism may be by electrical magnetic, able to swtich on or off as required.

When the keyplate 12, carried by the arm 9, is in the retracted position, or uncoupled configuration, it allows the transport apparatus 1 to pass by the wheeled object 2, for example a trolley, positioned to a side of the transport apparatus 1.

In the uncoupled configuration it allows the transport apparatus 1 to move alongside the rear wheel 7 of the wheeled object 2 without the wheel 7 hitting the forward-restraining device 14.

In the coupled configuration the forward-restraining mechanism 14, prevents the wheeled object 2 from moving forwards when the transport apparatus 1 is decelerating, especially useful when decelerating suddenly.

In this example a sensor 16 indicates when the coupling device 6 has moved to the coupled or non-coupled configurations. A rubber pad may be fitted on the inner face of the keyplate 8 to assist in holding the wheeled object 2 or trolley in place and giving some compliance. In this embodiment this pad is mounted on a sensor comprising a spring loaded metal pad which when pressed by the object in position, indicates that the wheeled object 2 or trolley is in position. This pad mounted on a spring loaded metal pad, could offer some compliance to the positioning and could be the link to the operation of the sensor to confirm to the control system that a wheeled object or trolley is present and located correctly.

In this example a side guide 17 is mounted to the transport apparatus 1 and assists with alignment as the transport apparatus 1 approaches the wheeled object 2. For example a trolley.

When two wheeled objects 2 or trolleys are close together the keyplate 8 may not be able to access the area between the wheeled objects 2 or trolleys. In this case the pusher or bumper 18 that, in some embodiments, can be a freely rotating wheel can push the first wheeled object 2 or trolley forward to create sufficient space for the keyplate 8 to enter between two wheeled objects 2 or trolleys.

The forward-restraining mechanism 14 in this example may be separate to the keyplate. It may have its own single or multi axis system to position itself correctly in front of the trolley to prevent forward movement. This adds additional flexibility to couple with a variety of trolley types. If the keyplate 8 can provide sufficient side force from the axis unit then a forward stop would not be required.

Figure 6A shows an example of a coupling device 6 when for example the object handling system 10 also comprises a track 3. The transport apparatus 1 is shown on a transverse side of a wheeled object 2. The proposed direction of travel is shown by arrow F. Force exerted on a wheeled object 2, via the coupling device 6 is shown as arrow A. Arrow D shows the force exerted by the forward-restraining mechanism 14 when the transport apparatus 1 is breaking or slowing down. In this example as shown in Figure 6A there is a track 3 therefore the track 3 guides the wheeled object 2 in a forward or reverse direction therefore the transport apparatus 1 need not be responsible for exerting transverse force on the wheeled object 2.

Figure 6B shows an example of a transports apparatus 1 and a wheeled object 2 in an object transport system 10 that does not comprise a track 3, or at least the wheeled object 2 is not being guided by a track 3. Besides the forces as mentioned in the Figure 6A embodiment, there is in addition a possible transverse force C from the transport apparatus 1 that may move the wheeled object 2 to the left with regard to a forward direction of travel F. Also shown is a force B which is the possible force exerted by the transverse-restraining mechanism 15 (not shown as under the body of the wheeled object 2) should the coupled wheeled object 2 travel too far to the left of the transport apparatus, in relation to the direction of travel F.

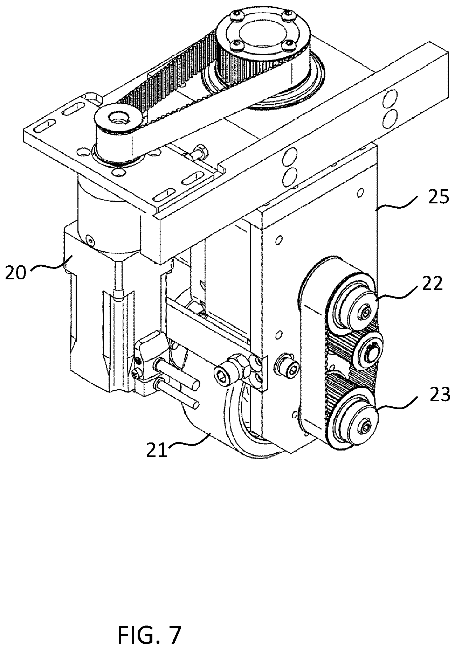

Figure 7 shows an example of a combined steer and drive unit 25 shown which uses a steering motor attached to a frame connected to a vertical axis. The vertical axis is connected to a frame containing a drive motor and drive wheel assembly. Also shown for this example are a steering motor 20, a drive wheel 21, drive motor axle 22 and drive axle 23. This is an example of a drive and steer mechanism suitable for use with embodiments of the present invention but there may well be others also suitable too.

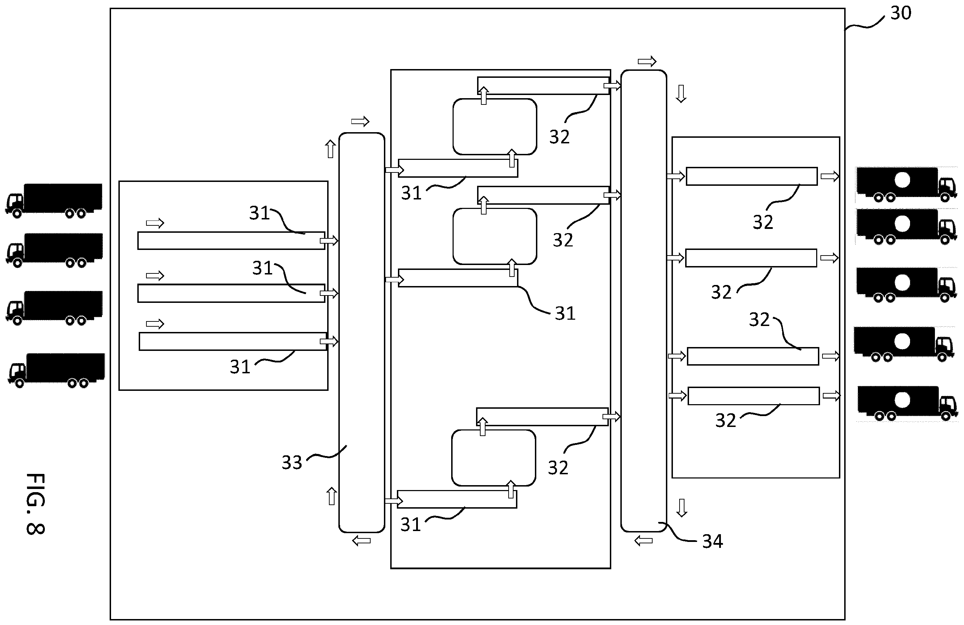

Figure 8 shows a diagram of an example of an object handling system 30 where processing of items in wheeled objects 2, for example, trolleys, is carried out. Wheeled objects or trolleys 2 would arrive at the handling system 30 from various external locations typically from the road or rail network. On entering the system 11 they would then be entered into infeed buffers 31 and then sent to various processes. The processes themselves would typically have an infeed buffer 31 and an outfeed buffer 32. Items would be removed and the empty trolleys 2 transferred to the process outfeed buffers 32. There is also sometimes a requirement to transfer trolleys 2 directly without processing (Transferring from an infeed vehicle to an outfeed vehicle via buffers 31, 32). There are 2 main functions that need to be carried out:
- Buffering of trolleys 2.
- Transfer of trolleys 2 between buffers 31, 32 via number of transfer loops 33, 34.

In this example the buffering of trolleys 2 may be carried out by a non-steerable apparatus 25 using a track 3. Also in this example, and other embodiments, the transfer of trolleys 2 may be carried out by a steerable apparatus 25 without a track 3.

In this example these processed items may then need to be transferred to more processes and so on until all processing is complete. They must then be transported to one of many departure points prior to exit from the system where typically they would be loaded onto the trailers of heavy goods vehicles.

A system capable of performing these tasks would be made up of a number of items of apparatus. These may include steering and non-steering versions of the transport apparatus 1, some with coupling arrangements 6 and some without.

In this example the movement of trolleys 2 from input to output in the system would typically be as follows:

### Infeed Buffer Operation

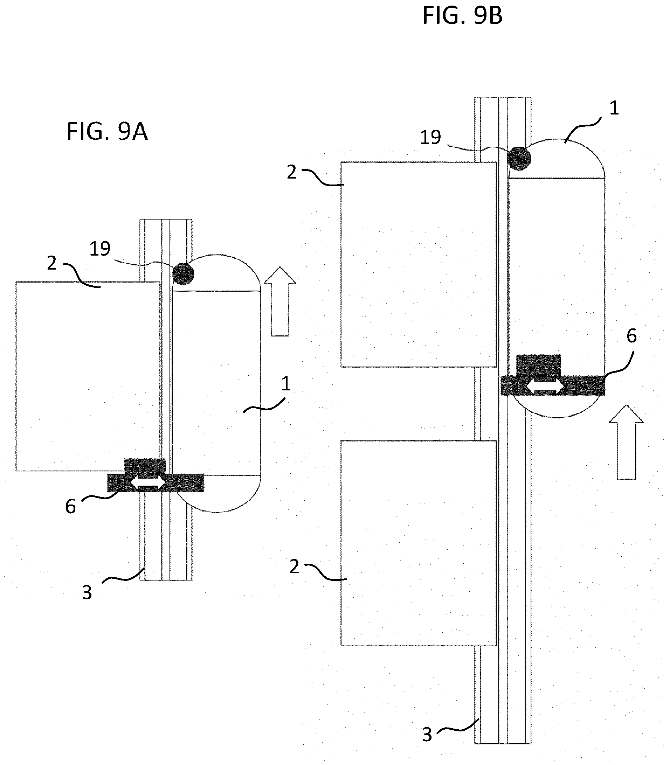

As shown in figures 9A and 9B an operator would remove a trolley 2 from a vehicle, for example a lorry, and take it to the infeed point on an infeed buffer 31. The infeed buffer 31 may consist of sections of track 3 where a non-steerable transport apparatus 1 would travel. This transport apparatus 1 may then connect to the trolley 2 and move it along the track towards the exit of the infeed buffer 31. The transport apparatus 1 may sense the area in front of the trolley 2, by sensor 19, to ensure that space was available. If space was not available it may disconnect from the trolley 2 and move forward along the track 3 until it sensed a space. It may then reverse to the nearest trolley, connect to it and move it forward. These operations may be repeated until trolleys 2 have reached the end of the infeed buffer 31 and there is no space between trolleys 2. During this process it may be required to return to the input end of the buffer to free up space to allow operators to add further trolleys 2.

### Transfer loop operation

The transfer and movement of a trolley 2 from the exit point of a buffer to the entry point of another buffer may be carried out as follows:
A transport apparatus 1 fitted with steering and a coupling device 6 may arrive adjacent to the exit point. It may then reverse into the track 3 of the buffer until it had identified features on the trolley 2 that determine its position. The transport apparatus 1 may then activate a sequence to couple with a trolley 2. It may then move forwards and exit the buffer and proceed through the facility to its destination buffer without the use of tracks 3 for guidance. It may then move onto the track 3 of the destination buffer along with the trolley 2. Once the trolley 2 is correctly positioned in the buffer the transport apparatus 1 may disconnect from the trolley 2, reverse and remove itself from the track 3. It may then move to transfer further trolleys 2 between buffers.

In this example because the steerable transport apparatus 1 with coupling device 6 is based on the non-steerable apparatus 1 it can also carry out the functions of the non-steerable apparatus 1. It can move trolleys 2 along a buffer and transfer trolleys 2 to the exit point. This may be an advantage when the flow of trolleys 2 is low.

The steerable transport apparatus 1 with or without coupling device 6 is also capable of moving between tracks 3 so that every track 3 does not need a permanently allocated transport apparatus 1. In certain applications this may reduce the capital cost of the equipment as the transport apparatus 1 may move to the track 3 where there was work to do.

### Outfeed buffer operation

This may be similar to the operation of the infeed buffer but in this case the steerable transport apparatus 1 may carry out the task of input of trolleys 2 to an outfeed buffer 32 and operators may remove trolleys 2 from the outfeed buffer 32 to load onto vehicles. In this example a non-steering apparatus 1 may move product along the track to the buffer exit point.

### Single trolley collection and delivery

In many applications there may be a requirement to collect or deliver trolleys 2 to and from individual manual or automatic processes. The transport apparatus 1 permits the efficient collection and distribution of trolleys 2 in this situation.

As an example, a short section of track 3 may be fitted to the floor where a collection or delivery point is required. A trolley 2 may be placed in this section of track 3 either manually or automatically. If the track 3 is long enough to hold two trolleys 2 then the transport apparatus 1 can deliver one trolley 2 to the first position in the track 3 and then retract the coupling device to an uncoupling configuration, move forward to between the first and second track 3 positions, extend the coupling device 6 and connect to the second trolley 2. The second trolley 2 may then be moved by the transport apparatus 1 to a further destination in the handling system. This has the advantage that the transport apparatus 1 may spend less time traveling without a trolley 2 between destinations.

In the Figure 8 and Figure 9A and 9B examples as well as throughout the application the terms "trolley" and "wheeled object" are used interchangeably.

Figure 9A shows a transport apparatus 1 on a rail 3 guide that is a double rail 3 that allows the transport apparatus 1 to move independently of wheeled objects 2 on the rail 3 on the other side of the rail 3. Although embodiments of the transport apparatus can move independently of a rail 3, the rail allows even greater control of direction and may save energy. The coupling system 6 can still extend to a coupling position as shown in Figure 9A and retract to a non-coupling position as shown in Figure 9B. A sensor 19 in this example positioned at the front of the transport apparatus 1 enables the transport apparatus to locate wheeled objects 2.

## Claims

1. A transport apparatus for transporting wheeled objects in an object handling system, the transport apparatus comprising:
- a drive system for moving the transport apparatus;
- a coupling device configured to move between at least, a first coupled configuration wherein the coupling device is configured to enable engagement with a wheeled object, such that movement of the transport apparatus enables movement of a coupled wheeled object, and a second non-coupled configuration wherein the coupling device is configured not to enable engagement with a wheeled object, such that movement of the transport apparatus does not move a wheeled object via the coupling device;
- a controller to control the movement of the transport apparatus and the movement of the coupling device between the coupled configuration and non-coupled configuration.

2. A transport apparatus as claimed in claim 1, further comprising, a forward-restraining mechanism configured to prevent a wheeled object, when coupled with the transport apparatus, being moved in a forward direction, beyond a pre-set distance from an engaging portion of the coupling device of the transport apparatus.

3. A transport apparatus as claimed in either claim 1 or 2, further comprising, a transverse-restraining mechanism configured to prevent a wheeled object, when coupled with the transport apparatus, being moved in a transverse direction from the direction of travel, beyond a pre-set distance from an engaging portion of the coupling device of the transport apparatus.

4. A transport apparatus as claimed in claim 2, or 3, wherein the forward-restraining mechanism comprises a bar configured a pre-set distance in a forward direction of the engaging portion of the coupling device when the coupling device is in a coupled configuration.

5. A transport apparatus as claimed in anyone of claims 2, 3 or 4, wherein the forward-restraining mechanism is configured to move between at least,
- a first extended, or coupled, configuration wherein the forward-restraining mechanism in the extended or coupled configuration is in the forward path of a coupled wheeled object when coupled to the transport apparatus, and,
- a second non-extended, or non-coupled, configuration wherein the forward-restraining mechanism is configured not to restrain forward movement of a wheeled object.

6. A transport apparatus as claimed in claim 5 wherein the forward restraining mechanism and the coupling device are configured to move between the said at least first configuration and second configuration simultaneously.

7. A transport apparatus as claimed in claim 2 wherein the transverse-restraining mechanism comprises a bar.

8. A transport apparatus as claimed in claim 2 or 7 wherein the transverse restraining mechanism is configured to move between at least,
- a first extended, or coupled, configuration wherein the transverse-restraining mechanism in the extended or coupled configuration is in a transverse path of a coupled wheeled object when coupled with the transport apparatus, and,
- a second non-extended, or non-coupled, configuration wherein the transverse-restraining mechanism is configured not to restrain transverse movement of a wheeled object.

9. A transport apparatus as claimed in any preceding claim wherein the portion of the coupling device that is configured to enable engagement with a wheeled object, comprises a flat surface; or a vertical flat surface, or a wheel.

10. A transport apparatus as claimed in anyone of claims 3, 7 or 8 wherein the forward-restraining mechanism and the transverse-restraining mechanism and the coupling device are attached to each other, and are configured to move simultaneously between the extended or coupled configuration and the non-extended or non-coupled configuration.

11. A transport apparatus as claimed in any previous claim wherein the coupling device comprises at least one extending arm, that the at least one extending arm is configured to move between the first and second said configurations.

12. A transport apparatus as claimed in claim 11 wherein the at least one extending arm comprises any one of or any combination of: an engaging portion of the coupling device; a forward-restraining mechanism; or a transverse-restraining mechanism.

13. A transport apparatus as claimed in any preceding claims wherein further comprises, a sensor

14. A method of moving a wheeled object comprising the step of:
- providing a transport apparatus as claimed in any one of claims 1 to 13;
- positioning the transport apparatus in a transverse location to a wheeled object;
- extending a coupling device of the transport apparatus such that the coupling device couples with a wheeled object, wherein upon forward movement of the transport apparatus an engaging portion of the coupling device will engage with a surface of the wheeled object causing a force to be exerted upon the wheeled object when the transport apparatus moves in at least a forward direction.

15. An object handling system comprising at least one transport apparatus and claimed in any one of claims 1 to 13, further comprising at least one wheeled object and a controller in communication with the at least one transport apparatus.
